# EUROPEAN PATENT APPLICATION

(11) **EP 4 670 974 A1**
(43) Date of publication of application: **31.12.2025**
(21) Application number: 24184648.4
(22) Date of filing: 26.06.2024
(51) Int. Cl.: B33Y 10/00, B33Y 70/00

(54) **PRINTED OBJECT AND METHOD FOR PREPARING SAID PRINTED OBJECT**

(71) Applicant: Canon Production Printing Holding B.V., 5914 HH Venlo (NL)
(72) Inventor: SALOMONS, Otto W., Venlo (NL); MIEDEMA, Mark, Venlo (NL); COLIN, Peter O., Venlo (NL); PICCHIONI, Francesco, Venlo (NL); VAN DER ASDONK, Pim, Venlo (NL)
(74) Representative: Canon Production Printing IP Department

(57) **Abstract**

The present invention relates to a method for preparing a printed object. The present invention further relates to said printed object.

## Description

The present invention relates to a method for preparing a printed object. The present invention further relates to said printed object.

### Background of the Invention

Method for preparing printed objects are known in the art. Such methods include e.g. the formation of 3-dimensional (3D) objects. Material may be deposited using an inkjet device. The material may form an object. Many types of materials can be used to form an object. For example, phase change inks can be used. Phase change inks are solid at room temperature but fluid at an elevated temperature. Hence, phase change inks can be jetted at elevated temperatures using an inkjet device and solidify after being applied onto a recording medium or a support medium. A further example of materials suitable for forming objects are materials capable of undergoing a cycloaddition chemical reaction, such as a Diels Alder reaction. An example of such printing method is described in US2015/0337147. This document describes the use of so-called reversible polymer materials. The polymer materials are formed by a cycloaddition reaction between two components. An ink composition comprising the two components are applied onto the recording medium. After application of the ink onto the recording medium, a cycloaddition reaction takes place forming a polymeric material.

A disadvantage of printing an object using a single ink composition is that the composition of the resulting object, and its corresponding properties, are the same throughout the entire object. It is desired to be able to have local changes within a single object in one or more properties of the object.

It is therefore an object of the present invention to provide a method for preparing a printed object, wherein at least one property of the object in a first section of the object differs from said property in a second section of the object.

It is a further object of the invention to provide a printed object, wherein at least one property of the object in a first section of the object differs from said property in a second section of the object.

### Summary of the Invention

The object of the invention is achieved in a method for preparing a printed object, the method comprising the steps of:
a. Applying a first composition onto a recording medium, the first composition comprising a first reagent A ;
b. Applying a second composition onto a recording medium, the second composition comprising a second reagent B;
wherein the first reagent A and the second reagent B are capable to undergo a cycloaddition reaction, and wherein in a first section a first amount of the first composition and a second amount of the second composition is applied, and wherein in a second section a third amount of the first composition and a fourth amount of the second composition is applied, such that in the first section the ratio between reagents A and B is a ratio R₁ and in the second section the ratio between reagents A and B is a ratio R₂.

In the method according to the present invention, a printed object may be prepared. The printed object may be a two-dimensional (2D) object or a three-dimensional (3D) object. The object may be prepared using a suitable printing technique, preferably inkjet printing.

In the method according to the present invention, in step a, a first composition is applied onto a recording medium. The first composition may be applied using a print device, for example an inkjet print head. The first composition may comprise a first reagent A. The first composition may optionally comprise additional components, such as one or more of a solvent, a colorant, a fungicide or a biocide.

The recording medium may be selected from any recording medium suitable for 2,5 D and/or 3D applications. Such examples are known by the person skilled in the art. Examples of such media include polymeric media, glass media, ceramic media and metallic media, and media comprising a mixture thereof. An example of a commercially available recording medium is Dibond ^{®} medium. Optionally, the recording medium may be an object, such as a 2,5 D or 3D printed object.

In the method according to the present invention, in step b, a second composition is applied onto a recording medium. The second composition may be applied using a print device, for example an inkjet print head. The second composition may comprise a second reagent B. The second composition may optionally comprise additional components, such as one or more of a solvent, a colorant, a fungicide or a biocide. The first composition and the second composition may preferably be applied using separate print units. Separate print units may be e.g. separate inkjet print heads or separate nozzles or nozzle groups within a single inkjet print head.

The first reagent A and the second reagent B are capable of undergoing a cycloaddition reaction. A cycloaddition reaction is a chemical reaction in which two or more unsaturated molecules combine with the formation of a cyclic product. Examples of cycloaddition reactions include Diels alder reactions, which are cycloaddition reactions between a diene and a dienophile; Huisgen reaction, also known as azide-alkyne Huisgen cycloaddition, which is a 1,3-dipolar cycloaddition between an azide and a terminal or internal alkyne to give a 1,2,3-triazole; a nitrone-olefin cycloaddition, which is the combination of a nitrone with an alkene or alkyne to generate an isoxazoline or isoxazolidine via a [3+2] cycloaddition process. Cycloaddition reactions may be reversible. For example, at lower temperatures, the cycloaddition product may be formed and may be stable. However, at elevated temperatures, a cycloelimination reaction may occur, which results in the formation of the starting products out of the cycloaddition adduct. The inventors have found that, because of the reversibility of cycloaddition reactions, it is possible convert the printed object back into the raw materials, i.e. first reagent A and second reagent B. This allows re-use of the reagents when the printed object is no longer needed. In addition, also the recording medium may be re-used.

In the method according to the present invention, in a first section a first amount of the first composition and a second amount of the second composition is applied, whereas in a second section a third amount of the first composition and a fourth amount of the second composition is applied. The amounts of the first composition and the amounts of the second composition locally applied may hence differ between a first section and a second section. Section may refer to a certain part of the object to be formed. A first section may have first coordinates, whereas a second section may have second coordinates different or partially different from the coordinates of the first section.

In the method according to the present invention, the first composition and the second composition may be applied in the first section and the second section, such that in the first section the ratio between reagents A and B is a ratio R₁ and in the second section the ratio between reagents A and B is a ratio R₂. Ratio R₁ may be different from R₂. The difference in ratio between the first section and the second section may result in a difference in property between the first section of the printed object and the second section of the printed object. The difference in property may be for example be one or more of a difference in color, a difference in flexibility, a difference in mechanical strength, a difference in hardness, a difference in translucency, etc. Optionally, more than one property may differ between the first section and second section of the printed object.

In an embodiment, in a third section, the third section being positioned in between the first section and the third section, a fifth amount of the first composition and a sixth amount of the second composition is applied such that in the third section the ratio between reagents A and B is a ratio Rx, wherein R₁<R_{X}<R₂. The difference in ratio between the first section, the second section and the third section may result in a difference in property between the first section of the printed object, the second section of the printed object and the third section of the printed object. The third section is positioned in between the first section and the second section. The ratio between the first and second reagents applied in the third section is in between the ratios between the first and second reagents applied in the first section and second section, respectively. Consequently, the value of a property in a third section may be in between the value of said property in the first section and the value of said property in the second section. Hence, a gradient may be formed within the printed object. Optionally, there may be a fourth, fifth, sixth, etc section, wherein a fourth, fifth, sixth, etc ratio between the first reagent A and the second reagent B is applied.

In an embodiment, a first one of the reagent A and reagent B is a furan reagent and the other one of reagent A and reagent B is a maleimide reagent. Furan (C₄H₄O) is a 5-membered ring having 4 carbon atoms and 1 oxygen atom. Furan as well as furan derivatives may be used. Furan derivatives are components, in which on one or more of the carbon atoms of the furan ring bear a substituent. Optionally, the furan component may be a multifunctional furan component comprising a plurality of furan moieties. The furan moieties within multifunctional furan component may be the same or different. Maleimide (H₂C₂(CO)₂NH) is also a 5-membered ring. The ring consists of 4 carbon atoms and a nitrogen atom. Maleimide as well as maleimide derivatives may be used. Maleimide derivatives are components, in which on one or more of the carbon atoms of the maleimide ring, not being the carbon atoms directly adjacent to the nitrogen atom, bear a substituent. Optionally, the nitrogen atom may bear a substituent other than a hydrogen atom. Optionally, the maleimide component may be a multifunctional maleimide component comprising a plurality of maleimide moieties. The maleimide moieties within multifunctional maleimide component may be the same or different. Furan and maleimide can undergo a Diels Alder reaction. The Diels Alder reaction between furan and maleimide is reversible at elevated temperatures.

In a further embodiment, wherein the furan reagent comprises a first furan component F₁ and a second furan component F₂.The first furan component F₁ may be different from the second furan component F₂.Preferably, at least one of the first furan component F₁ and the second furan component F₂ is a multifunctional component. Optionally, both the first furan component F₁ and the second furan component F₂ are multifunctional furan components, i.e. components comprising more than one furan moiety per molecule. The number of furan moieties in the first furan component F₁ may be different from the number of furan moieties in the second furan component F₂.

In an embodiment, the number of furan moieties in first furan component F₁ may be double the number of furan moieties in the second furan component F₂. For example, the first furan component F₁ may comprise 4 furan moieties and the second furan component F₂ may comprise 2 furan moieties. In an alternative example, the first furan component F₁ may comprise 6 furan moieties and the second furan component F₂ may comprise 3 furan moieties. In a further alternative example, the first furan component F₁ may comprise 8 furan moieties and the second furan component F₂ may comprise 4 furan moieties.

In a further embodiment, the bismaleimide reagent comprises a first maleimide component M₁ and a second maleimide component M₂. The first maleimide component M₁ may be different from the second maleimide component M₂. Preferably, at least one of the first maleimide component M₁ and the second maleimide component M₂ is a multifunctional component. Optionally, both the first maleimide component M₁ and the second maleimide component M₂ are multifunctional maleimide components, i.e. components comprising more than one maleimide moiety per molecule. The number of maleimide moieties in first maleimide component M₁ may be different from the number of maleimide moieties in the second maleimide component M₂.

In an embodiment, the number of maleimide moieties in first maleimide component M₁ may be double the number of maleimide moieties in the second maleimide component M₂. For example, the first maleimide component M₁ may comprise 4 maleimide moieties and the second maleimide component M₂ may comprise 2 maleimide moieties. In an alternative example, the first maleimide component M₁ may comprise 6 maleimide moieties and the second maleimide component M₂ may comprise 3 maleimide moieties. In a further alternative example, the first maleimide component M₁ may comprise 8 maleimide moieties and the second maleimide component M₂ may comprise 4 maleimide moieties.

By combining a furan component having a plurality of furan moieties with a maleimide component having a plurality of maleimide moieties, a network may be formed. The formation of a network may increase the robustness of the printed object.

In an embodiment, the printed object is a three-dimensional object. A three dimensional object may have a certain width, a certain length and a certain height. At least one of the width, the length and the height may locally vary.

In an embodiment, the method further comprises the step of :

### c. Heating the recording medium.

By heating the recording medium, the interface between the recording medium and the printed object may be heated. Hence, at the interface a reverse cycloaddition reaction may take place, which allows to remove the object from the recording medium.

In an aspect of the invention, a printed object is provided, the printed object having a first section and a second section, at least one property in the first section being different from said property in the second section.

Hence, the printed object is an object obtainable by the method according to the present invention.

### Brief description of the drawings

These and further features and advantages of the present invention are explained hereinafter with reference to the accompanying drawings showing non-limiting embodiments and wherein:
Fig. 1 is a block diagram of a printing system according to the invention;
Fig. 2A-2E show a schematic representation of a first embodiment of the method for printing a relief structure according to the present invention.
Fig. 3A-3E show a schematic representation of a second embodiment of the method for printing a relief structure according to the present invention.
Fig. 4A shows a perspective view of a third embodiment of a printed object according to the present invention.
Fig. 4B shows a top view of a third embodiment of a printed object according to the present invention.

In the drawings, same reference numerals refer to same elements.

### Detailed description of the drawings

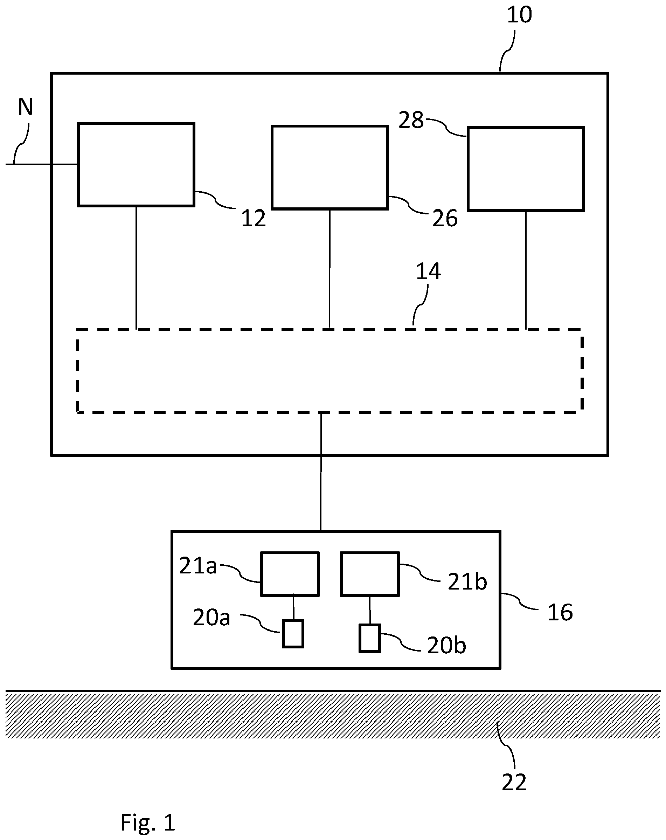

Fig. 1 schematically shows a print system for printing 3D objects by depositing material on a support in a number of printing passes. A print controller 10 receives print data in the form of a rasterized object image comprising height data, e.g. in the form of a height channel, for indicating a height of each voxel of the rasterized object image, and comprising color data. The height data specify, for two-dimensional print coordinates X, Y, the height of the respective voxel of the image. The height data describes a height, i.e. a thickness, of the object in the third dimension Z.

The print controller 10 includes a communication interface 12 connected e.g. to a network N for receiving the print data, and a raster image processor 14 configured for converting the print data into a number of pass images in a format suitable for driving a print engine 16 synchronized with a motion control system 28 configured for controlling relative motion between printheads 20 of the print engine 16 and a support 22. The motion control system 28 comprises print carriage motion controllers of first and second printing directions X, Y and, optionally a print carriage height controller Z for controlling a height of the printheads 20 above the support 22. For example, the motion control system 28 is configured to control relative motion between the printheads 20 and the support 22 in the X, Y, and Z direction. The printheads have nozzles for jetting the material onto the support.

The print system shown in Fig. 1 comprises a first inkjet print head 20a and a second inkjet print head 20b. The first inkjet printhead 20a is connected to first ink container 21a. The first ink container 21a comprises the first composition. The print system further comprises a second ink container 21b. The second ink container 21b comprises the second composition. The second ink container 21b is connected to the second print head 20b.

The print controller 10 further comprises a memory 26, which may be implemented in software.

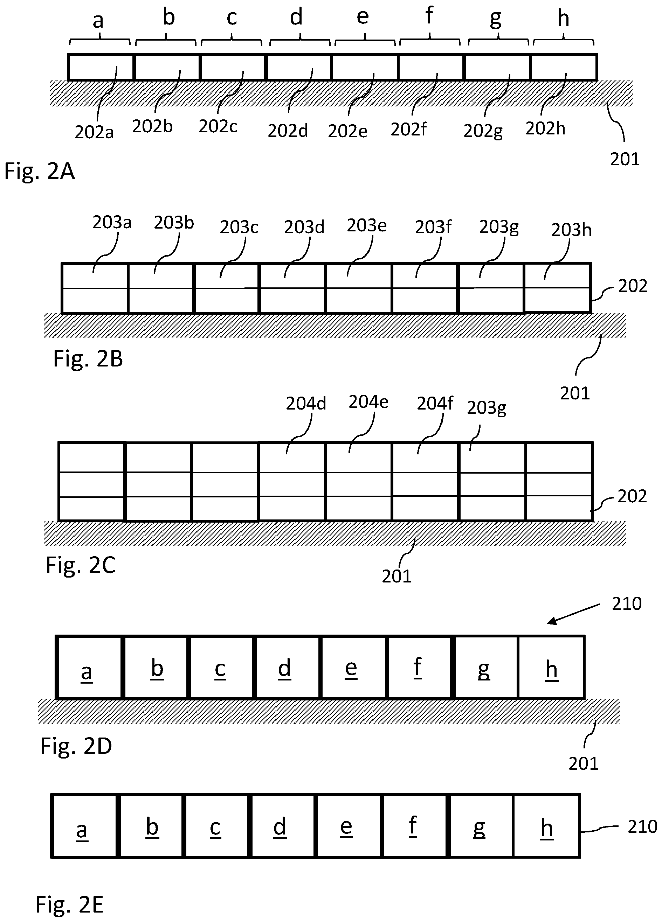

Fig. 2A-2E show a schematic representation of a first embodiment of the method for printing a relief structure according to the present invention.

In Fig. 2A a support structure 201 is shown. The support structure 201 is provided with a first layer of ink. On top of the support structure 201, quantities of ink have been applied on regions a, b, c, d, e, f, g and h, forming sections 202a, 202b, 202c, 202d, 202e, 202f, 202g and 202h, respectively. These sections 202a-202h together form the first ink layer 202. The quantities of ink are applied by applying a predetermined amount of the first ink composition and a predetermined amount of the second ink composition. The relative quantities of the first ink composition and the second ink composition differ for the different sections. In the example shown, the relative amount of first ink applied is highest in sections 202a, lowest in sections 202h and gradually decreases from sections 202a to 202h, whereas the relative amount of second ink applied is lowest in sections 202a, highest in sections 202h and gradually increases from sections 202a to 202h. The sections 202a-202h are depicted in Fig. 2A as squares, but in practice they may have an alternative shape. The relative amounts of the first and second ink composition may differ for different sections of the printed object.

Fig. 2B shows the support structure 201 provided with a first and second layer of ink. The second layer 203 is formed by sections 203a, 203b, 203c, 203d, 203e, 203f, 203g and 203h. The droplets forming the second layer are applied on top of the first layer of ink. In the embodiment shown in Fig 2B, the first layer 202 is entirely covered with droplets. In an alternative embodiment, the first layer 202 may not be completely covered by the second layer. In the example shown, the relative amount of the first composition as well as the relative amount of the second ink composition is the same in the same region compared to the first layer 202.

Fig. 2C shows the support structure 201 provided with a first layer of ink 202, a second layer of ink 203 and a third layer of ink layer of ink 204. The third layer is formed by sections 204a, 204b, 204c, 204d, 204e, 204f, 204g and 204h. The droplets forming the third layer are applied on top of the second layer of ink 203. In the embodiment shown in Fig 2C, the second layer 203 as well as the third layer are entirely covered with ink. Fig. 2D shows a relief structure 210 provided on a support structure 210. The relief structure is built up by applying a plurality of layers of ink onto the support structure. Fig. 2E shows the printed structure 210 after release from the support layer 201.The printed structure comprises sections a, b, c, d, e, f, g and h. Each of these sections has been formed by a predetermined relative amount of the first ink and a relative amount of the second ink, wherein the relative amount of first ink applied is highest in sections a, lowest in sections h and gradually decreases from sections a to h, whereas the relative amount of second ink applied is lowest in sections a, highest in sections h and gradually increases from sections a to h. Thus, in the example shown there is a gradient in one direction. In an alternative embodiment, there may be a gradient in two directions. In a further alternative embodiment, there may be a gradient in three directions.

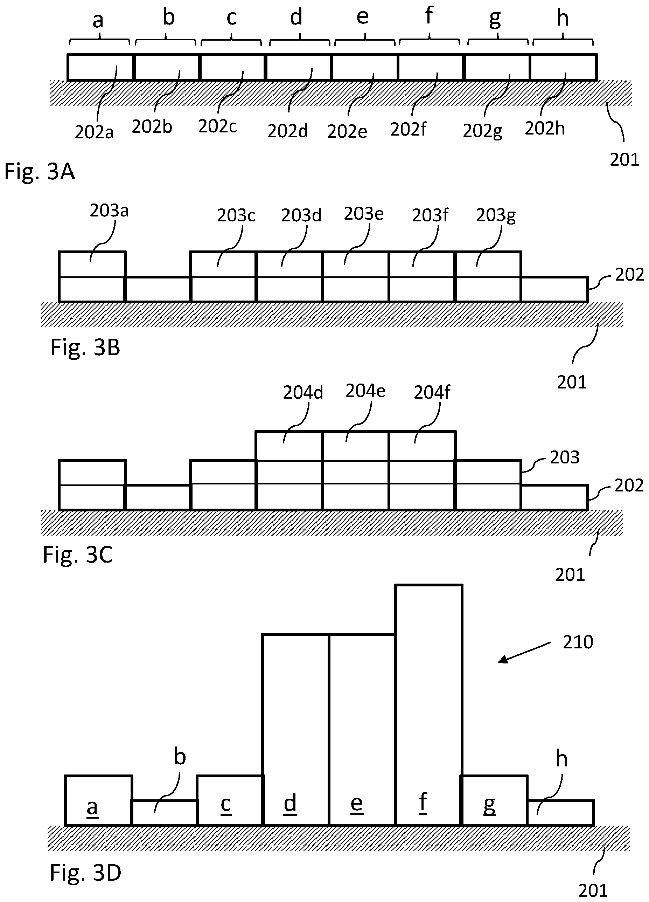

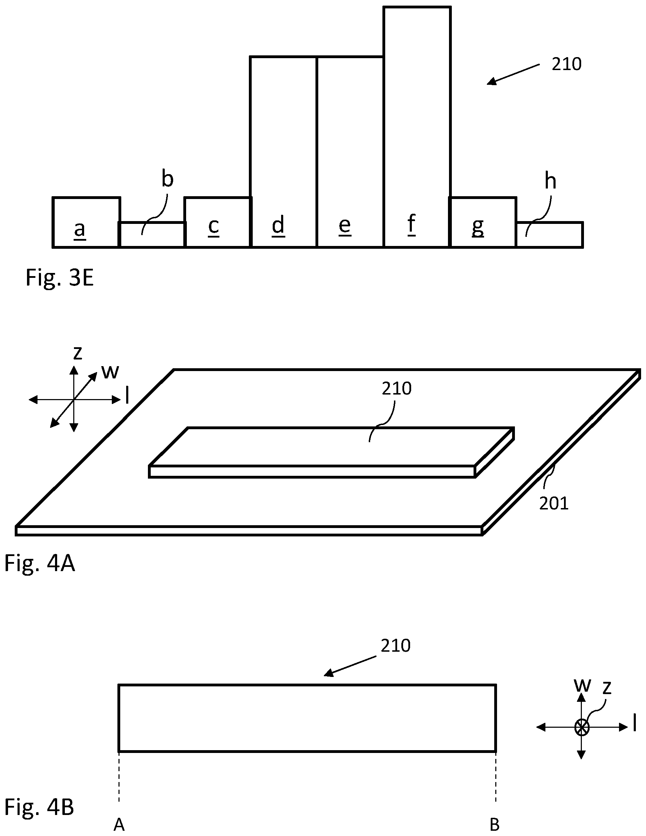

Fig. 3A-3E show a schematic representation of a second embodiment of the method for printing a relief structure according to the present invention. The second embodiment differs from the first embodiment in that the printed structure 210 is a relief structure, wherein the thickness of the structure is not evenly distributed over the different regions of the structure. In regions b and h, only one layer of ink is applied; in regions a, c and g two layers of ink have been applied and in regions d, e and f a plurality of layers has been applied. This results in a printed structure having a relief structure.

### Experiments and examples

### Materials

BMI-689 (referred to as **M2** in the remainder of the experimental section) was purchased from Caplinq Europe. BMI-689 (or M2) is a bismaleimide. Furfuryl glycidyl ether (96%) (FGE), furfuryl amine (99%), Hexamethylenediamine (98%) and Tris(2-aminoethyl)amine (96%) were purchased from Aldrich. All materials were used as received and stored at -4 °C.

### tris(2-maleimidoethyl)amine (M3)

tris(2-maleimidoethyl)amine **(M3** or TMEA) was synthesized according to a two-step synthesis. In the first step, three molar equivalent of FMA (2.5g , 15 mmol) and 27 mL methanol was added to a round-bottom flask equipped with a dropping funnel and a reflux condenser. Under magnetic stirring, a solution of 0.74 g (5 mmol) of tris(2-aminoethyl)amine in 8 mL of methanol was added dropwise to the flask. During this addition the full dissolution of the furan-maleic anhydride adduct was observed. The oil bath was set to 56 °C and the mixture was left to reflux for 3 days, after which the methanol was removed by rotary evaporation. The resulting intermediate furan-protected trismaleimide product was left in the flask in the form of a white solid. The resulting product had a yield of 100% and no further purification was required.

The same flask was subsequently equipped with an insulated Dean-Stark trap and reflux condenser. Toluene was added to the Dean stark trap and flask. The oil bath temperature was set at 115 °C and the reaction was left to reflux for one day. The solution turned slightly yellow with orange precipitate at the bottom. The toluene was removed from the round bottom flask by rotary evaporation. The residual solid was washed with ethyl acetate. The dissolved tris-maleimide was separated from the insoluble orange fraction by filtration and the residue was collected. The ethyl acetate was removed from the filtrate through rotary evaporation, yielding M3 in the form of a yellow solid. This was further dried in a vacuum oven overnight at 40 °C. Yield: 40-64%. The product was characterized using ¹H-NMR spectroscopy.

### 3,3'-((furan-2-ylmethyl)azanediyl)bis(1-(furan-2-ylmethoxy)propan-2-ol) (F3)

3,3'-((furan-2-ylmethyl)azanediyl)bis(1-(furan-2-ylmethoxy)propan-2-ol) (F3) was prepared as follows: **F3** was synthesized using the epoxide-amine click reaction between furfuryl glycidyl ether and a parent amine molecule. As such, F3 was prepared by mixing 10.0 g (65 mmol) of FGE with 3.14 g (32 mmol) of furfuryl amine. The reaction was carried out for 7 days at 100 °C to ensure full conversion. 1H-NMR analysis including COSY correlations show no presence of the epoxide signal at δ = 3.0 ppm, and COSY correlations verify the structure of the trifunctional furan.

### 9-(2-(bis(3-(furan-2-ylmethoxy)-2-hydroxypropyl)amino)ethyl)-1,17-di(furan-2-yl)-6,12-bis(3-(furan-2-ylmethoxy)-2-hydroxypropyl)-2,16-dioxa-6,9,12-triazaheptadecane-4,14-diol (F6)

F6 was synthesized using the epoxide-amine click reaction between furfuryl glycidyl ether and a parent amine molecule. As such, **F6** was synthesized by reacting 10.0 g of furfuryl glycidyl ether with 0.87 g (7 mmol) tris(2-aminoethyl)amine. The reaction was carried out for 7 days at 100 °C to ensure full conversion. 1H-NMR analysis including COSY correlations show no presence of the epoxide signal at δ = 3.0 ppm, and COSY correlations verify the structure of the multifunctional furan.

### Methods

### Printing method

Printed structures were generated using a static jetting method in which 400 layers were jetted on each other on a dibond^{®} plate. During the printing process, the dibond^{®} plate as well as the object printed on the plate were kept at 90°C. A schematic view of the printed structures is shown in Fig. 4A and Fig. 4B.

Two piezo inkjet print heads were used. A first piezo inkjet print head was configured to eject droplets of a furan-containing ink, a second piezo inkjet print head was configured to eject droplets of a maleimide-containing ink.

The ratio between the amount of furan-containing ink and the amount of maleimide-containing ink was gradually changed along line A-B-C (see Fig. 4B).

### Stiffness

Stiffness of the objects was tested using a three-point-bending-flexural-test. The tests were performed using a tensile testing machine Zwick 010 nr. 1. The following parameters were used:
- Span: 28 mm
- Support bar radius: 2 mm
- Loading edge radius: 1,5 mm
- Force transducer: 10 N
- Preload: 0,01 N
- Preload speed: 5 mm/min
- Test speed: 10 mm/min
- Maximum force: 8 N
- Maximum deformation: 2 mm
- Flexure modulus determination: 0,05% - 0,25% strain

### ink compositions

A first furan-containing ink was prepared by mixing 4 grams of F6 and 6 grams of F3, which resulted in ink IF.

A first maleimide-containing ink IM-1 was prepared by providing neat M2. This ink is referred to as IM-1.

A second maleimide-containing ink was prepared by mixing 9.5 grams of M2 and 0.5 grams of M3, which resulted in ink IM-2.

### Comparison Experiments

Prints were made by using the printing method described above. The printed objects were rectangular prisms, having a dimension of 28 mm x 3 mm x 4 mm (*l* x *w* x *h*)*.*

In the print examples Ex 1 and Ex 2, which are print examples according to the present invention, the ratio between the furan-containing ink and the maleimide-containing ink was gradually changed during printing. The gradual change is in the direction along the length (l) of the printed object (see Fig. 4A and 4B). At area A, a first ratio R₁ is applied, whereas at area B, a second ratio R₂ is applied. Area A is a first end-portion of the printed object, area B is a second end-portion of the printed object. In the length direction, (i.e. from A to B), the ratio between the furan containing ink and the maleimide containing ink is gradually changed from R₁ to R₂.

In the comparative print examples, which are print examples not according to the present invention, no gradient was applied. A constant ratio between the furan containing ink and maleimide containing ink was used for each comparative print example.

**Table 1: Comparison examples**

| Comparative print example | Ink compositions | Ratio furan/maleimide |
|---|---|---|
| CE 1-A | IF, IM-1 | 0.7 |
| CE 1-B | IF, IM-1 | 1.0 |
| CE 1-C | IF, IM-1 | 1.4 |
| CE 2-A | IF, IM-2 | 0.7 |
| CE 2-B | IF, IM-2 | 1.0 |
| CE 2-C | IF, IM-2 | 1.4 |

The stiffness of the printed objects was determined by measuring the flexural modulus. The measurements are summarized in table 2.

**Table 2: Stiffness**

| Comparative print example | Flexural modulus (MPa) |
|---|---|
| CE 1-A | 60 |
| CE 1-B | 112 |
| CE 1-C | 12 |
| CE 2-A | 100 |
| CE 2-B | 288 |
| CE 2-C | 56 |

The flexural modes measured for the printed objects, differ for different printed objects. The flexural mode and hence the stiffness is highest for printed object CE 1-B and CE 2-B. printed object CE 1-B and CE 2-B are the printed objects printed with equimolar amounts of furan moieties and maleimide moieties.

The flexural modes, and hence the stiffness, for printed object CE 1-A and CE 2-A was lower than the stiffness of printed object CE 1-B and CE 2-B, respectively, but higher than the stiffness of printed object CE 1-C and CE 2-C, respectively. For printed objects CE 1-A and CE 2-A, the amount of furan moieties was lower than the amount of maleimide moieties, whereas for printed objects CE 1-C and CE 2-C, the amount of furan moieties was higher than the amount of maleimide moieties.

Hence, by using different ratios of furan moieties and maleimide moieties, different mechanical properties can be obtained.

The comparative ink examples did not have a gradient in the composition within the object and are hence examples not according to the present invention.

### Print Examples.

**Table 3 Print Examples**

| print example | Ink compositions | Ratio furan/maleimide | |
|---|---|---|---|
| | | R1 | R2 |
| Ex 1 | IF, IM-1 | 1.0 | 1.4 |
| Ex 2 | IF, IM-2 | 0.7 | 1.0 |

Print examples Ex 1 and Ex 2 were prepared by printed furan containing ink and maleimide containing ink as shown in table 3. By printing an object by locally varying the relative amounts of the furan moieties and the maleimide moieties, objects were obtained each object having a mechanical property (stiffness) that differs for different parts of said object. The print examples do have a gradient in the composition within the object and are hence examples according to the present invention.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for preparing a printed object, the method comprising the steps of:
a. Applying a first composition onto a recording medium, the first composition comprising a first reagent A ;
b. Applying a second composition onto a recording medium, the second composition comprising a second reagent B;
wherein the first reagent A and the second reagent B are capable to undergo a cycloaddition reaction, and wherein in a first section a first amount of the first composition and a second amount of the second composition is applied, and wherein in a second section a third amount of the first composition and a fourth amount of the second composition is applied, such that in the first section the ratio between reagents A and B is a ratio R₁ and in the second section the ratio between reagents A and B is a ratio R₂.

2. Method according to claim 1, wherein in a third section, the third section being positioned in between the first section and the third section, a fifth amount of the first composition and a sixth amount of the second composition is applied such that in the third section the ratio between reagents A and B is a ratio Rx, wherein R₁<R_{X}<R₂.

3. Method according to claim 1 or claim 2, wherein a first one of the reagent A and reagent B is a furan reagent and wherein the other one of reagent A and reagent B is a maleimide reagent.

4. Method according to claim 3, wherein the furan reagent comprises a first furan component F₁ and a second furan component F₂.

5. Method according to claim 3 or 4, wherein the bismaleimide reagent comprises a first maleimide component M₁ and a second maleimide component M₂.

6. Method according to any of the preceding claims, wherein the printed object is a three-dimensional object.

7. Method according to any of the preceding claims, wherein the method further comprises the step of :
c. Heating the recording medium.

8. Printed object, the printed object having a first section and a second section, at least one property in the first section being different from said property in the second section.
